# EUROPÄISCHE PATENTSCHRIFT

(11) **EP 1 977 814 B1**
(45) Veröffentlichungstag und Bekanntmachung des Hinweises auf die Patenterteilung: **10.10.2012**
(21) Anmeldenummer: 08153981.9
(22) Anmeldetag: 02.04.2008
(51) Int. Cl.: B01D 53/04, E04B 1/86, E04C 2/04, E04F 13/08

(54) **Lochplattenanordnung zur Luftreinhaltung**
Perforated sheet array for air purification
Agencement de plaques perforées destinées à garder l'air propre

(30) Priorität: 02.04.2007 DE 202007004823 U
(43) Veröffentlichungstag der Anmeldung: 08.10.2008
(73) Patentinhaber: Genex - Vertrieb Ltd. & Co. KG, 07806 Neustadt an der Orla (DE)
(72) Erfinder: Geipel, Udo, 07806 Neustadt (Orla) (DE)
(74) Vertreter: GROSSE SCHUMACHER KNAUER VON HIRSCHHAUSEN

(56) Entgegenhaltungen:
- DE-U1-202006 014 693
- DE-U1-202006 016 352
- JP-A- 2003 056 169
- JP-A- 2003 096 933

## Beschreibung

Die Erfindung betrifft eine Lochplattenanordnung, die an Wänden und Decken von Räumen in Bauwerken angebracht ist. Mehrere derartige Lochplattenanordnungen werden üblicherweise an einer Unterkonstruktion in einem definierten Abstand von Wand- oder Deckenflächen befestigt.

Die Lochplattenanordnung besteht aus einer Lochplatte aus einem formhaltigen Material, wie z.B. aus Metall, Holz, Gipskarton und Holzwerkstoffen. Auch andere Materialien werden je nach Anforderung an Festigkeit und Gewicht verwendet. Die Lochplatte ist überwiegend rechteckig und besitzt eine Sichtfläche, eine Rückfläche und vier Kantenflächen. Eine Mehrzahl von Öffnungen erstreckt sich von der Sichtfläche zur Rückfläche überwiegend senkrecht zur Sichtfläche durch die Lochplatte hindurch. Die Lochplattenanordnung besteht ferner aus einer porösen Materialschicht, die auf der Rückfläche der Lochplatte angebracht ist.

Derartige bekannte Bauplatten dienen ebenfalls dazu, die Akustik in Räumen zu verbessern. Durch die Öffnungen ist eine Verbindung zu einer Luftschicht hinter der Lochplatte hergestellt, so dass Schallwellen aus dem Raum hinter die Lochplatte geleitet werden. Üblicherweise ist auf der Rückseite der Lochplatte eine Schicht eines porösen Materials wie Schaumstoff oder Filz aufgebracht, um die Schallwellen zu dämpfen.

Neuerdings werden an das Raumklima höhere Anforderungen gestellt. Besonders sollen Immissionen wie Rauch, Gerüche und ähnliches reduziert werden. Lüftungssysteme mit Filtern können diese Aufgabe übernehmen, erfordern allerdings einen zusätzlichen technischen Aufwand mit entsprechendem Raumbedarf für Leitungen und Aggregate.

In den Filtern wird unter anderem Zeolith zur Bindung der Immissionen verwendet. Es ist auch bekannt, Zeolith als integralen Bestandteil von Plattenelementen für die Wand- und Deckenverkleidung einzusetzen. Zeolith ist dabei in einem bestimmten Anteil der Grundmasse des Plattenelements beigemischt. Zeolith kann auch in Form eines Pulvers auf das Plattenelement aufgebracht sein. Letzteres ist beispielsweise aus der DE 20 2006 016 352 U1 bekannt.Das Zeolith nimmt die Immissionen aus der Raumluft auf und bindet sie in ihrer Molekularstruktur. Nach einer gewissen Zeit tritt allerdings eine Sättigung des Zeoliths auf, und die Aufnahmefähigkeit für die Immissionen nimmt ab oder ist nicht mehr vorhanden.

Werden Plattenelemente mit integralem Zeolith dauerhaft mit Gebäudeteilen verbunden, so kann die reinigende Wirkung der Plattenelemente nur durch aufwendigen Ersatz der gesamten Plattenelemente wiederhergestellt werden. Ein weiterer Nachteil bei Plattenelementen mit integralen Zeolithbestandteilen ist, dass nur ein geringer Anteil des Zeolith im Bereich der Oberflächen der Plattenelemente mit der Raumluft in Verbindung tritt und dort die Immissionen aufnehmen kann. Besonders bei einem dichten Plattenmaterial, wie es bei erhöhten Festigkeitsanforderungen notwendig ist, ist der wirksame Bereich des Zeolith auf eine kleine Zone nahe der Oberfläche der Plattenelemente begrenzt. Auch eine Beschichtung der Sichtflächen von Plattenelementen aus optischen Gründen reduziert die wirksame Fläche der Plattenelemente.

Aus der DE 20 2006 014 693 U1 ist es bekannt, den Zeolith bestandteil in eine Gewebeschicht einzubetten, die unterhalb bzw. auf der Rückseite des Plattenelements vorgesehen ist, wie es beispielsweise bei einer Trittschalldämmung bei Fußböden der Fall ist.

Es ist Aufgabe der Erfindung, ein Lochplattenelement zur Verbesserung des Raumklimas, insbesondere zur Reduzierung von Immissionen in der Raumluft zu schaffen, wobei die oben genannten Nachteile vermieden werden.

Diese Aufgabe wird durch eine Lochplattenanordnung mit den Merkmalen des Anspruch 1 gelöst, indem eine auf der Rückseite der Lochplatte angebrachte poröse Materialschicht Zeolith enthält wobei die Luft die durch die Öffnungen hindurchströmt die poröse Materialschicht durchströmt. Die poröse Materialschicht schafft durch eine Porenstruktur in vorteilhafter Weise eine große mit Zeolith behaftete Oberfläche, mit der die Raumluft in Verbindung treten kann. Die Raumluft tritt dabei von der Sichtfläche durch die Öffnungen der Lochplatte hindurch und mit der porösen Materialschicht an der Rückfläche der Lochplatte in Verbindung. Vorteilhaft ist dabei auch, dass die Lochplatte selbst kein Zeolith enthält und die Sichtfläche optisch beliebig gestaltet werden kann. Die Lochplatte ist im Bereich der vier Kantenflächen mit Rändern versehen, die sich überwiegend senkrecht zu der Sichtfläche der Lochplatte zur Rückfläche hin erstrecken. Die Ränder ragen über die Rückfläche der Lochplatte hinaus und weisen innere Randflächen auf, die zur Rückfläche gerichtet sind. Auf die inneren Randflächen kann zusätzlich zur Rückseite der Lochplatte die poröse Materialschicht aufgebracht, mit der die Raumluft in Verbindung treten kann. Durch diese Anordnung ist die Kontaktfläche für die Luft vergrößert.

In einer vorteilhaften Ausführungsform enthält die poröse Materialschicht zusätzlich zu den Zeolithbestandteilen ein Gemisch aus Titandioxid TiO₂ und Siliziumdioxid SiO₂. Zudem sind auch andere Zusatzstoffe denkbar, wobei die luftreinigende Wirkung über einen photokatalytischen Prozess realisiert wird.

In vorteilhafter Weise ist die Rückseite der Lochplatte mit Stegen versehen, die senkrecht zur Rückseite hervorstehen und seitliche Stegflächen und obere Stegkanten aufweisen. Auch auf den Stegflächen ist die poröse Materialschicht aufgebracht.

Die poröse Materialschicht kann ein textiles Vlies sein, das auf mindestens eine der Rückfläche, der inneren Randflächen und der Stegflächen aufgeklebt ist.

Die poröse Materialschicht ist ebenfalls vorteilhaft als ein elastisches poröses Materialvolumen gebildet, das in einen Raum einklemmbar ist, der durch die inneren Randflächen und die Rückfläche gebildet ist.

Die Rückfläche, die inneren Randflächen und die Stegflächen können Räume bilden, die nicht die zeolithhaltige poröse Materialschicht bzw. das poröse Materialvolumen enthalten. Hierdurch wird die Luft in den Räumen verteilt, bevor sie die poröse Materialschicht bzw. das poröse Materialvolumen durchströmt.

Weiterhin ist es vorteilhaft, Befestigungselemente vorzusehen, die das poröse Materialvolumen an der Rückseite der Lochplatte in einer definierten Position fixiert halten. Die Befestigungselemente können Drahtbügel sein, die zwischen gegenüberliegenden Randflächen der Ränder oberhalb des porösen Materialvolumens verspannt sind und das poröse Materialvolumen in Kontakt mit der Rückseite hält. Die Befestigungselemente können das poröse Materialvolumen ebenfalls in Kontakt mit den oberen Stegkanten der Stege in einer definierten Position halten. Bei dieser Ausbildung bleibt zwischen der Rückfläche und der Unterseite der porösen Materialschicht ein Luftraum, von dem aus die Luft mit einer vergrößerten Fläche der porösen Materialschicht in Verbindung treten kann.

In den Zeichnungen sind bevorzugte Ausführungsformen der Erfindung dargestellt, und es zeigt:
Fig. 1: eine Seitenansicht einer nicht von der vorliegenden Erfindung umfassten Ausführung eines Lochplattenelements;
Fig. 2: eine Seitenansicht einer Ausführung eines Lochplattenelements mit Rändern und Stegen;
Fig. 3: eine Seitenansicht einer Ausführung eines Lochplattenelements mit Hohlräumen.

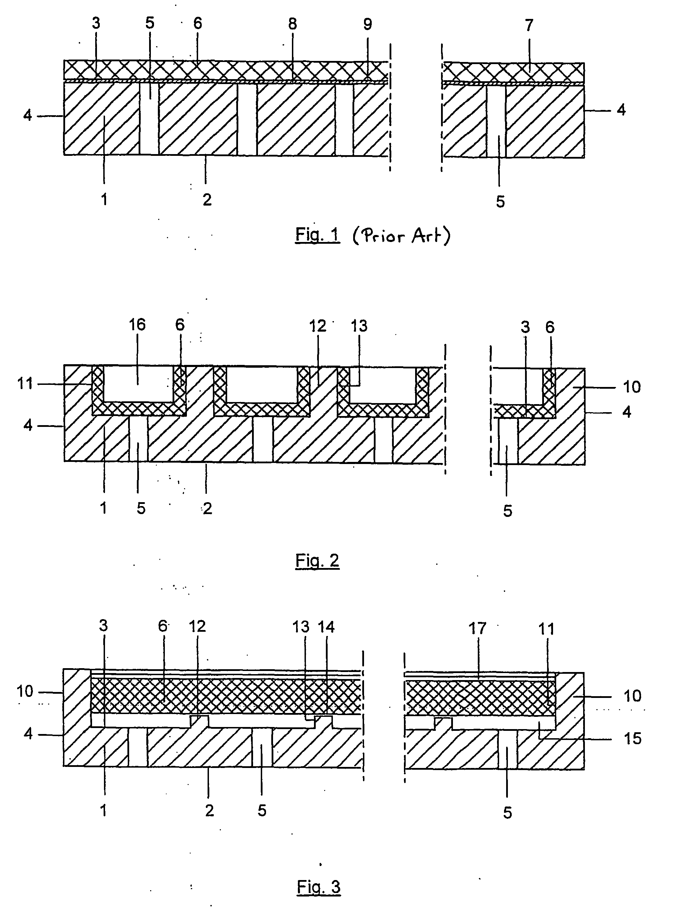

Fig. 1 zeigt eine Ausführung einer Lochplattenanordnung, die eine Lochplatte 1 enthält, die als Gipskartonplatte ausgeführt ist. Die Lochplatte 1 weist eine Sichtfläche 2, eine Rückfläche 3 und vier Kantenflächen 4 auf. Die Sichtfläche 2 ist nach der Montage der Lochplattenanordnung an der Decke bzw. an der Wand (nicht gezeigt) dem Raum zugewandt und besteht vorwiegend aus einer Papierschicht, die auf einen Gipskern aufgebracht ist. Die Rückfläche 3 besteht ebenfalls vorwiegend aus einer Papierkaschierung. Der Gipskern kann mit Fasern, wie z.B. Glasfasern zur Verstärkung versetzt sein. Die Kantenflächen 4 können je nach Bedarf mit Montagehilfen wie Fasen, Nuten u. ä. versehen sein. Die Lochplatte 1 weist Öffnungen auf, die sich von der Sichtfläche 2 zur Rückfläche 3 überwiegend senkrecht zur Sichtfläche durch die Lochplatte 1 hindurch erstrecken. Die Öffnungen sind Löcher 5 mit zumeist rundem Querschnitt, aber auch andere Formen sind in Abänderung der bevorzugten Ausführung möglich. Durch die Löcher 5 kann Raumluft von der Seite der Sichtfläche 2 aus durch die Lochplatte 1 hindurch zu der Rückfläche 3 strömen. Diese Luftströmung ist bedingt durch übliche Luftbewegungen im Raum.

Auf der Rückfläche 3 der Lochplatte 1 ist eine poröse Materialschicht 6 aufgebracht. Die poröse Materialschicht 6 enthält ein offenporiges Material, so dass Luft, die durch die Löcher 5 hindurch strömt, ebenfalls die poröse Materialschicht 6 durchströmen kann.

Die poröse Materialschicht 6 enthält Zeolith 7 und die Zuschlagsstoffe Titandioxid TiO₂ und Siliziumdioxid SiO₂, wobei das Zeolith und die Zuschlagsstoffe in die Materialstruktur der porösen Materialschicht 6 eingelagert sind. Bei der bevorzugten Ausführung enthält die poröse Materialschicht 6 ein textiles Vlies, an dessen textilen Fasern Zeolith angelagert ist. Die durchströmende Luft ist in Kontakt mit den in die Materialstruktur eingelagerten Stoffen, und die in der Luft enthaltenen Immissionen werden in dem Zeolith gebunden. Über die Zuschlagsstoffe Titandioxid TiO₂ und Siliziumdioxid SiO₂ wird eine luftreinigende Wirkung durch einen photokatalytischen Prozess erzeugt.

Die poröse Materialschicht 6 ist mit der Rückfläche 3 der Lochplatte 1 mit einem Kleber 8 verklebt. Der Kleber 8 kann flächig auf der Rückfläche 3 der Lochplatte 1 aufgebracht sein. In Abänderung dieser Ausführung kann der Kleber 8 auch punktförmig aufgebracht sein. Die poröse Materialschicht 6 ist mit ihrer Unterseite 9 in Kontakt mit dem Kleber 8 und wird durch dessen Adhäsion mit der Rückfläche 3 verbunden. In weiteren Ausführungen kann die poröse Materialschicht 6 auch durch Wärmeeinwirkung mit der Rückfläche 3 der Lochplatte 1 verbunden sein.

Bei einer vorteilhaften Ausführung gem. Fig. 2 sind im Bereich der vier Kantenflächen 4 Ränder 10 angeordnet, die sich überwiegend senkrecht zur Sichtfläche 2 erstrecken und über die Rückfläche 3 der Lochplatte 1 hinaus ragen. Diese Ränder 10 haben zur Mitte der Lochplatte 1 weisende innere Randflächen 11. Auf diese inneren Randflächen 11 kann ebenfalls eine poröse Materialschicht 6 aufgebracht sein. Dadurch werden zusätzliche Kontaktflächen für die Luft geschaffen, um mit dem Zeolith und den weiteren Zuschlagsstoffen in der porösen Materialschicht in Verbindung zu treten und somit den Wirkungsgrad zur Luftreinigung zu verbessern.

Bei einer vorteilhaften Ausführung sind an der Rückfläche 3 der Lochplatte 1 gemäß Fig. 2 weiterhin Stege 12 angeordnet, die überwiegend senkrecht zu der Rückfläche 3 hervorstehen. Die Stege weisen seitliche Stegflächen 13 auf, auf die in vorteilhafter Weise ebenfalls die poröse Materialschicht 6 aufgebracht sein kann. Die poröse Materialschicht kann als textiles Vlies gebildet sein, das auf einer der Rückfläche, der Randflächen und der Stegflächen aufgebracht ist.

Die poröse Materialschicht 6 ist in einer weiteren Ausbildung gemäß Fig.3 als ein elastisches Materialvolumen ausgebildet. Das elastische Materialvolumen ist in einen Raum 16, der von der Rückfläche und den Kantenflächen 4 gebildet ist, zwischen den Kantenflächen 4 einklemmbar. Diese Anordnungen ermöglichen in vorteilhafter Weise ein leichtes Auswechseln der porösen Materialschicht, wenn die Wirkung des Zeolithanteils und/ oder der weiteren Zuschlagsstoffe erloschen ist oder wenn Verschmutzungen dies erforderlich erscheinen lassen.

Die Stege 12 können in einer bevorzugten Ausführung eine Höhe haben, die geringer ist als die Höhe der Kanten, gemessen in einer Richtung senkrecht zu der Rückfläche 3. Die Stege 12 weisen obere Kantenflächen 14 auf. Die Stege 12 erstrecken sich über die gesamte Länge und Breite der Rückfläche 3. Die Stege können jedoch auch in einer weiteren Ausführung in ihrem Verlauf entlang der Rückfläche unterbrochen sein. Die Kantenflächen 14 der Stege 12 sind mit der Unterseite 9 des porösen Materialvolumens verbunden. Dadurch ist ein Hohlraum 15 zwischen der Rückfläche 3 und der Unterseite 9 des porösen Materialvolumens gebildet, in dem sich die durch die Löcher 5 strömende Luft verteilt und das poröse Materialvolumen flächig durchströmt. Hierdurch wird in vorteilhafter Weise ein hoher Wirkungsgrad für den Kontakt mit der das Zeolith und die weiteren Zuschlagsstoffe tragenden Materialschicht 6 zur Luftreinigung erreicht.

Das elastische poröse Materialvolumen kann weiterhin auch mit Befestigungselementen 17 an der Rückfläche der Lochplatte 1 befestigt sein. Die Befestigungselemente 17 bestehen aus in Längsrichtung federnden Drahtbügeln, die zwischen gegenüberliegenden Kantenflächen 4 verspannt angeordnet sind, wobei das poröse Materialvolumen zwischen den Drahtbügeln und Rückfläche 3 gehalten ist.

Die poröse Materialschicht kann in einer bevorzugten Ausführungsform aus einem klebenden Material bestehen das auf mindestens einer der Rückfläche 3, der Stegflächen 13 und der Randflächen 11 aufgebracht ist, wobei das klebende Material mit Zeolith und den weiteren Zuschlagsstoffen_gemischt ist.

Anschließend wird der Vorgang der Luftreinigung beschrieben.

Die Lochplattenanordnung weist eine Vielzahl von Löchern 5 als Lochmuster in der Lochplatte 1 auf. Diese Löcher schaffen eine Verbindung von dem Raumluftbereich zu dem Bereich hinter der Lochplatte, wo die poröse Materialschicht an der Rückfläche 3 der Lochplatte 1 angebracht ist. Die poröse Materialschicht 6, die als textiles Vlies bzw. als poröses Materialvolumen ausgebildet sein kann, enthält das Zeolith und die weiteren Zuschlagsstoffe Titandioxid TiO₂ und Siliziumdioxid SiO₂. Das Zeolith ist zumeist in kristalliner Form an den Innenflächen der offenen Poren der porösen Materialstruktur, bzw. an den Außenflächen der Fasern des textilen Vlies angelagert. Die Raumluft strömt durch einzelne Löcher 5 der Lochplatte 1 von der Sichtfläche zur Rückfläche hin. Anschließend tritt sie in die poröse Materialschicht bzw. das textile Vlies ein und durchströmt diese. Besondere Ausführungen der Lochplattenanordnung begünstigen die Verteilung der Luft und die Luftströmungsverhältnisse im Bereich der porösen Materialschicht 6. Die mit Zeolith 7 und den weiteren Zuschlagsstoffen Titandioxid TiO₂ und Siliziumdioxid SiO₂ bedeckten Poren des porösen Materials bzw. die Textilfasern des Vlies werden umströmt, und das Zeolith 7 nimmt die Immissionen aus der Luft auf. Die Zuschlagsstoffe Titandioxid TiO₂ und Siliziumdioxid SiO₂ bewirken die photokatalytische Luftreinigung. Unterschiedliche Luftströmungsverhältnisse der Raumluft bewirken, dass die gereinigte Luft zu einem anderen Zeitpunkt aus dem Bereich der porösen Materialschicht durch die Löcher 5 wieder in den Raum zurückströmt.

## Patentansprüche

1. Lochplattenanordnung, bestehend aus
einer Lochplatte (1) aus einem formhaltigen Material, vorzugsweise aus Gipskarton, mit einer Sichtfläche (2), einer Rückfläche (3) und vier Kantenflächen (4), wobei sich eine Mehrzahl von Öffnungen (5) von der Sichtfläche (2) zur Rückfläche (3) überwiegend senkrecht zu der Sichtfläche der Lochplatte (1) durch die Lochplatte hindurch erstreckt; und
einer auf der Rückfläche (3) aufgebrachten porösen Materialschicht (6), **dadurch gekennzeichnet, dass** die poröse Materialschicht (6) Zeolith (7) enthält, die Luft, die durch die Öffnungen (5) hindurchströmt die poröse Materialschicht (6) durchströmt und die Lochplatte (1) im Bereich der vier Kantenflächen (4) Ränder (10) aufweist, die sich überwiegend senkrecht zu der Sichtfläche (2) erstrecken und über die Rückfläche (3) der Lochplatte (1) hinausragen, und die Ränder (10) jeweils eine innere Randfläche (11) aufweisen, wobei auf den Randflächen (11) ebenfalls die poröse Materialschicht (6) aufgebracht sein kann.

2. Lochplattenanordnung nach Anspruch 1, **dadurch gekennzeichnet, dass** die poröse Materialschicht (6) zusätzlich ein Gemisch aus zumindest Titandioxid und Siliziumdioxid enthält.

3. Lochplattenanordnung nach Anspruch 1 oder 2, **dadurch gekennzeichnet, dass** die Rückfläche (3) mit Stegen (12) versehen ist, die überwiegend senkrecht zur Rückfläche (3) hervorstehen, wobei die Stege (12) seitliche Stegflächen (13) und obere Kantenflächen (14) aufweisen.

4. Lochplattenanordnung nach Anspruch 3, **dadurch gekennzeichnet, dass** weiterhin mindestens auf einer der Stegflächen (13) und der Randflächen (11) die poröse Materialschicht (6) aufgebracht ist.

5. Lochplattenanordnung nach einem der Ansprüche 1 bis 4, **dadurch gekennzeichnet, dass** die poröse Materialschicht (6) ein textiles Vlies ist.

6. Lochplattenanordnung nach Anspruch 5, **dadurch gekennzeichnet, dass** das textile Vlies jeweils auf mindestens eine der Rückfläche (3), der Stegflächen (13) und der Randflächen (11) aufgeklebt ist.

7. Lochplattenanordnung nach Anspruch 1, **dadurch gekennzeichnet, dass** die Rückfläche (3) mit den Randflächen (11) einen Raum (16) bildet, in den die poröse Materialschicht (6) einbringbar ist.

8. Lochplattenanordnung nach Anspruch 7, **dadurch gekennzeichnet, dass** die poröse Materialschicht (6) als elastisches poröses Materialvolumen gebildet ist.

9. Lochplattenanordnung nach Anspruch 8, wobei das elastische poröse Materialvolumen in den Raum (16) federnd einklemmbar angebracht ist.

10. Lochplattenanordnung nach Anspruch 9, **dadurch gekennzeichnet, dass** die Höhe der Stege (12) senkrecht zu der Rückfläche (3) gemessen geringer als die Höhe der Ränder (10) ist und das elastische poröse Materialvolumen in einem definierten Abstand von der Rückfläche (3) auf den Kantenflächen (14) der Stege (12) angebracht ist.

11. Lochplattenanordnung nach einem der vorangegangenen Ansprüche 8-10, **dadurch gekennzeichnet, dass** das elastische poröse Materialvolumen mit Befestigungselementen (17) an der Rückfläche (3) der Lochplatte (1) befestigbar ist.

12. Lochplattenanordnung nach Anspruch 11, **dadurch gekennzeichnet, dass** die Befestigungselemente (17) auf die Rückfläche (3) aufgebrachte Klebernoppen sind.

13. Lochplattenanordnung nach einem der Ansprüche 8-10, **dadurch gekennzeichnet, dass** die Befestigungselemente (17) federnde Drahtbügel sind, die zwischen gegenüber liegenden Kantenflächen (4) verspannbar angebracht sind und wobei das elastische poröse Materialvolumen zwischen den federnden Drahtbügeln und einer der Kantenflächen (14) der Stege (12) und der Rückfläche (3) gehalten ist.

14. Lochplattenanordnung nach einem der Ansprüche 1 bis 4, **dadurch gekennzeichnet, dass** die poröse Materialschicht (6) aus einem klebenden Material besteht, das mit Zeolith (7) gemischt ist, und das klebende Material auf mindestens eine der Rückfläche (3), der Stegflächen (13) und der Randflächen (11) aufgebracht ist.

## Claims

1. A perforated plate assembly consisting of a perforated plate (1) of a shape-stable material, preferably plasterboard, with a visible surface (2), a rear surface (3) and four edge surfaces (4), wherein a plurality of openings (5) extend through the perforated plate from the visible surface (2) to the rear surface (3), predominantly perpendicularly to the visible surface of the perforated plate (1); and a porous sheet of material (6) applied to the rear surface (3), **characterised in that** the porous layer of material (6) includes zeolite (7), the air which flows through the openings (5) flows through the porous layer of material (6) and the perforated plate (1) has edges 10 in the vicinity of the four edge surfaces (4), which extend predominantly perpendicularly to the visible surface (2) and project beyond the rear surface (3) of the perforated plate (1) and the edges (10) each have a respective inner edge surface (11), whereby the porous layer of material (6) can also be applied to the edge surfaces (11).

2. A perforated plate assembly as claimed in claim 1, **characterised in that** the porous layer of material (6) additionally includes a mixture of at least titanium dioxide and silicon dioxide.

3. A perforated plate assembly as claimed in claim 1 or 2, **characterised in that** the rear surface (3) is provided with webs (12), which project predominantly perpendicularly to the rear surface (3), wherein the webs (12) have lateral web surfaces (13) and upper edge surfaces (14).

4. A perforated plate assembly as claimed in claim 3, **characterised in that** the porous layer of material (6) is further applied to at least one of the web surfaces (13) and the edge surfaces (11).

5. A porous plate assembly as claimed in one of claims 1 to 4, **characterised in that** the porous layer of material (6) is a textile fleece.

6. A perforated plate assembly as claimed in claim 5, **characterised in that** the textile fleece is secured by adhesive to at least one of the rear surface (3), the web surfaces (13) and the edge surfaces (11).

7. A perforated plate assembly as claimed in claim 1, **characterised in that** the rear surface (3) defines together with the edge surfaces (11) a space (16), into which the porous layer of material (6) may be introduced.

8. A perforated plate assembly as claimed in claim 7, **characterised in that** the porous layer of material (6) is provided in the form of an elastic, porous material volume.

9. A perforated plate assembly as claimed in claim 8, wherein the elastic, porous material volume is resiliently clampably fixed in the space (16).

10. A perforated plate assembly as claimed in claim 9, **characterised in that** the height of the webs (12) measured perpendicular to the rear surface (3) is smaller than the height of the edges (10) and the elastic, porous material volume is attached to the edge surfaces (14), of the webs (12) at a defined distance from the rear surface (3).

11. A perforated plate assembly as claimed in one of the preceding claims 8-10, **characterised in that** the elastic, porous material volume is fastenable to the rear surface (3) of the perforated plate with fastening elements (17).

12. A perforated plate assembly as claimed in claim 11, **characterised in that** the fastening element (17) are spots of adhesive applied to the rear surface (3).

13. A perforated plate assembly as claimed in one of claims 8 to 10, **characterised in that** the fastening elements (17) are resilient wire straps which are deformably attached between oposing edge surfaces (4) and wherein the elastic, porous material volume is retained between the resilient wire straps and one of the edge surfaces (14) of the webs (12) and the rear surface (3).

14. A perforated plate assembly as claimed in one of claims 1 to 4, **characterised in that** the porous layer of material (6) consists of an adhesive material, which is mixed with zeolite (7), and the adhesive material is applied to at least one of the rear surface (3), the web surfaces (13) and the edge surfaces (11).

## Revendications

1. Agencement de plaques perforées, composé de
une plaque perforée (1) en un matériau indéformable, de préférence en plâtre, avec une surface apparente (2), une surface arrière (3) et quatre surfaces latérales (4), dans lequel une pluralité d'ouvertures (5) s'étend au travers de la plaque perforée à partir de la surface apparente (2) à la surface arrière (3) principalement perpendiculairement à la surface apparente de la plaque perforée (1) ; et
une couche de matériau (6) poreux appliquée sur la surface arrière (3), **caractérisé en ce que** la couche de matériau poreux (6) contient de la zéolite (7), l'air, qui passe par les ouvertures (5), traverse la couche de matériau poreux (6) et la plaque perforée (1) présente dans la zone des quatre surfaces latérales (4) des bords (10) qui s'étendent principalement perpendiculairement à la surface apparente (2) et dépassent de la surface arrière (3) de la plaque perforée (1), et les bords (10) présentent respectivement une surface de bord intérieure (11), dans lequel la couche de matériau (6) poreux peut aussi être appliquée sur les surfaces de bord (11).

2. Agencement de plaques perforées selon la revendication 1, **caractérisé en ce que** la couche de matériau poreux (6) contient de plus un mélange au moins de dioxyde de titane et de dioxyde de silicium.

3. Agencement de plaques perforées selon la revendication 1 ou 2, **caractérisé en ce que** la surface arrière (3) est pourvue de nervures (12) qui dépassent principalement perpendiculairement à la surface arrière (3), dans lequel les nervures (12) présentent des surfaces de nervure (13) latérales et des surfaces latérales supérieures (14).

4. Agencement de plaques perforées selon la revendication 3, **caractérisé en ce que** la couche de matériau (6) poreux est en outre appliquée au moins sur une surface parmi les surfaces de nervure (13) et les surfaces de bord (11).

5. Agencement de plaques perforées selon l'une quelconque des revendications 1 à 4, **caractérisé en ce que** la couche de matériau (6) poreux est un non-tissé textile.

6. Agencement de plaques perforées selon la revendication 5, **caractérisé en ce que** le non-tissé textile est respectivement collé sur au moins une surface parmi la surface arrière (3), les surfaces de nervure (13) et les surfaces de bord (11).

7. Agencement de plaques perforées selon la revendication 1, **caractérisé en ce que** la surface arrière (3) forme avec les surfaces de bord (11) un espace (16), dans lequel la couche de matériau poreux (6) peut être introduite.

8. Agencement de plaques perforées selon la revendication 7, **caractérisé en ce que** la couche de matériau (6) poreux est constituée comme un volume de matériau poreux élastique.

9. Agencement de plaques perforées selon la revendication 8, dans lequel le volume de matériau poreux élastique est monté de manière à pouvoir être coincé élastiquement dans l'espace (16).

10. Agencement de plaques perforées selon la revendication 9, **caractérisé en ce que** la hauteur des nervures (12) perpendiculairement à la surface arrière (3) est inférieure à la hauteur des bords (10) et le volume de matériau poreux élastique est monté à une distance définie de la surface arrière (3) sur les surfaces latérales (14) des nervures (12).

11. Agencement de plaques perforées selon l'une quelconque des revendications 8 à 10, **caractérisé en ce que** le volume de matériau poreux élastique peut être fixé avec des éléments de fixation (17) sur la surface arrière (3) de la plaque perforée (1).

12. Agencement de plaques perforées selon la revendication 11, **caractérisé en ce que** les éléments de fixation (17) sont des nopes de colle appliqués sur la surface arrière (3).

13. Agencement de plaques perforées selon l'une quelconque des revendications 8 à 10, **caractérisé en ce que** les éléments de fixation (17) sont des étriers métalliques élastiques qui sont montés de manière à pouvoir être serrés entre des surfaces latérales (4) opposées et dans lequel le volume de matériau poreux élastique est maintenu entre les étriers métalliques élastiques et une surface parmi les surfaces latérales (14) des nervures (12) et la surface arrière (3).

14. Agencement de plaques perforées selon l'une quelconque des revendications 1 à 4, **caractérisé en ce que** la couche de matériau poreux (6) se compose d'un matériau adhésif mélangé à de la zéolite (7), et le matériau adhésif est appliqué sur au moins une surface parmi la surface arrière (3), les surfaces de nervure (13) et les surfaces de bord (11).
